# EUROPEAN PATENT SPECIFICATION

(11) **EP 2 107 759 B1**
(45) Date of publication and mention of the grant of the patent: **06.04.2011**
(21) Application number: 08300168.5
(22) Date of filing: 31.03.2008
(51) Int. Cl.: H04L 29/06

(54) **Handling received data messages of a text-based protocol**
Behandlung von empfangenen Datennachrichten eines textbasierten Protokolls
Manipulation de messages de données reçus selon un protocole basé sur texte

(43) Date of publication of application: 07.10.2009
(73) Proprietor: Mitsubishi Electric R&D Centre Europe B.V., 1119 NS Schiphol Rijk (NL); Mitsubishi Electric Corporation, Chiyoda-ku Tokyo, 100-8310 (JP)
(72) Inventor: Mangin, Christophe, 35590, L'HERMITAGE (FR); Foube, Laurent, 35340, LIFFRE (FR); Rollet, Romain, 35000, RENNES (FR)
(74) Representative: Cabinet Plasseraud

(56) References cited:
- EP-A- 1 494 426
- EP-A- 1 881 674
- GB-A- 2 430 335
- US-A1- 2006 268 857
- "Zero-Overhead Contention-less SIP Stack Leveraging Programmable RNIC" IP.COM JOURNAL, IP.COM INC., WEST HENRIETTA, NY, US, 20 February 2008 (2008-02-20), XP013123905 ISSN: 1533-0001

## Description

### BACKGROUND OF THE INVENTION

### 1. Technical Field

The present invention relates generally to a text-based protocol, like-SIP protocol (for 'Session Initiation Protocol') or HTTP protocol (for `HyperText Transfer Protocol') or SMTP protocol (for 'Simple Mail Transfer Protocol'), and more particularly to a protection of a terminal using an application based on this type of protocol.

### 2. Related Art

Some text-based protocols are used in a lot of networks. It is the case for the protocol SIP standardized by the IETF (for 'Internet Engineering Task Force'). This text-based protocol is used notably for application VolP (for Voice over Internet Protocol').

Such a text-based protocol has a syntax defined through grammar rule sets, as a high-level programming language. Consequently, decoding a SIP message can be a complex task and the entities in charge of such a decoding operation have significant amounts of memory and computing resource.

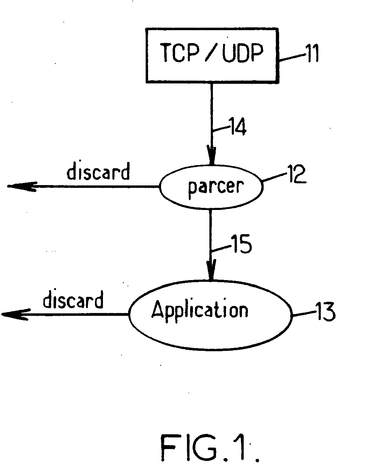

Figure 1 illustrates a processing of a SIP message in a classical architecture wherein a SIP message 14 is transmitted through a TCP (for 'Transmission Control Protocol') or UDP (for 'User datagram Protocol') layer.

When the message SIP 14 is received on an UDP or a TCP port at a terminal, through a TCP/UDP stack 11, it is analyzed by a SIP parser 12. This parser checks the syntax of this SIP message and generates a SIP structure 15 adapted for a corresponding SIP application 13.

During this processing, the received SIP message is checked two times, at first at the SIP parser 12 level and, latter at the SIP application 13 level. Generally, when an error is detected on the SIP message by the SIP parser or by the SIP application the SIP message is discarded.

The step of checking carried out at the SIP parser 12 is complex and consume much time. Indeed, before deciding to discard a SIP message, the SIP parser need to parse this message quite entirely. Consequently, processing power can be consumed needlessly.

In addition, generally, terminals can have limited processing resource because of different reasons like form-factor, or cost, and, then, the processing resource is determined in order to be adapted for normal operating condition. Consequently, when such a terminal operates in anomalous operating conditions, due for instance to many checking tasks at the SIP parser level, the terminal is not able to perform correctly its basic tasks because it does not have enough processing resource in this case. Document XP 13123905 by IBM discloses the use of a pre parser.

Thus, sending a lot of SIP messages to some terminals can be an efficient attack against a network service based on this protocol. In particular, some software functions processing SIP messages can be targets for efficient attacks to prevent terminals from performing any normal operations.

The invention proposes to improve robustness and performance of applications, based on text-based protocol, running on a terminal.

### SUMMARY OF THE INVENTION

In view of the foregoing, there is a need for enhancing a method of handling data messages received according to a text-based protocol which is able to increase the performance and the protection against attacks.

A first aspect of the present invention proposes a method of handling received data messages according to claim 1.

By providing to an application running on the terminal a message context in association with the received data message, it is possible to carry out some steps of checking on the received message, upstream of the analysis performed on said data message at the application level. Thus, it is possible to anticipate some checking steps in order to reduce the load due to check the data message at the application level and in order to optimise the checking of the received data message at the terminal level.

In these conditions, some attacks based on sending a lot of data messages to overload the corresponding application can be prevented. It can be particular advantageous to carry out such a method for SIP applications.

The message context information can be very useful for the corresponding application which will receive the data message and its associated message context.

In one embodiment, the set of pre parsing criterion includes a set of grammatical rules and/or a set of semantic rules.

The set of grammatical rules can be advantageously fixed according to the analysed text-based protocol and correspond to a partial analysis on several determined relevant fields.

Several determined relevant fields can be selected in order to have a godd compromise between the robustness offered by a complete grammatical analysis and the efficiency of handling.

For SIP protocol, this set can be based on the ABNF grammar (for 'Augmented Backus-Naur form') as defined in the corresponding IETF RFC 3261, and simplified to improve efficiency and robustness.

The set of semantic rules can correspond to a partial analysis to check validity of the several determined relevant fields.

This set of rules can allow a compromise between the efficiency and the robustness. This partial analysis can correspond, for instance, to check the content of one of the relevant fields; it can correspond to check the length of such a field in the data message.

Before step of pre parsing, a pre discarding step can be advantageously carried out, said pre discarding step being in charge to determine if a message is considered as discarded based on a set of pre discarding criterion. Such pre discarding criterion can be based on a threshold value of throughput of received messages, for instance.

In one embodiment of the present invention, a data message, which is classified as pre discarded, is not processed through the other steps of pre processing.

When received data messages are received in data packets, before step /1/, a step of delineating consecutive data messages from received data packets can be advantageously performed. This step can be useful when the used transport protocol is the TCP protocol.

Before step of providing the data message and the associated message context to the application, a step of filtering said data message based on result of pre parsing step can be further performed.

The text-based protocol can be one of those defined by IETF such as SIP, HTTP and SMTP protocol.

The message context can be filled during the pre parsing step.

A second aspect of the present invention proposes a pre processing module adapted to handle received data messages according to a text-based protocol at a terminal;
said pre processing module comprising a following set of units:
- a pre parsing unit adapted to pre parse said received data message, according to a set of pre parsing criterion;
- a generating unit adapted to generate a message context to be associated to said data message, said message context indicating information obtained from the pre parsing unit; and
- a filtering unit adapted to provide said data message and said associated message context to an application running on the terminal.

This pre processing module can comprise one set of units per connexion handled at the terminal level.

This pre processing module can further comprise a configuration interface adapted to receive configuration information relative to at least one unit from the set of units.

Such a pre processing module can be an offload module, meaning that it can be carried out by another processor than the main processor.

A third aspect of the present invention proposes a terminal comprising a pre processing module according to the second aspect of the present invention.

### BRIEF DESCRIPTION OF THE DRAWINGS

Further features and advantages of the present invention will become more apparent from the description below. This is given purely by way of illustration and should be read in conjunction with the appended drawings, of which:
Figure 1 is a view of architecture of SIP message handling according to a prior art.
Figure 2 illustrates the processing of a received SIP message in architecture of a terminal according to one embodiment of the present invention.
Figure 3 illustrates in detail a SIP socket according to one embodiment of the present invention.
Figure 4 illustrates the use of a SIP pre processing module in a hardware terminal.

### DESCRIPTION OF PREFERRED EMBODIMENTS

The present invention is described herein below in one exemplary application to SIP protocol. But, it is easy to apply the same principles to any other text-based protocol.

SIP protocol parsing is a particularly complex task that requires CPU and memory resources, notably in an embedded environment, because SIP protocol is based on a complex description language that involves a lot of controls, at a reception side.

One embodiment of the present invention allows facilitating the parsing and checking tasks made by SIP applications running on a terminal side. For that purpose, in one embodiment of the present invention, a pre processing is performed in order to find and check main items inside the received SIP signalling messages.

Such a pre processing allows checking rapidly and efficiently a received SIP message, by checking only some main items, in order to be able to discard the SIP message in some cases, or to retrieve some information useful for checking stage at the SIP application level. For that purpose, some information is associated to the SIP message to be provided to the SIP application, in an associated message context, according to the present invention.

Thus, by performing such a pre processing, it is possible to inform the SIP application in order to facilitate the checking step performed at the application level.

This pre processing does not replace the parsing performed by the SIP application. However, it provides for each received SIP message an associated message context containing information useful for the SIP application in order to improve the efficiency of the parsing carried out at the application level. Moreover, this pre processing can advantageously enhance robustness of the SIP application by preventing an overload due to erroneous SIP messages for instance.

Such a message context can advantageously be used at the SIP application level in order to discard a SIP message considered as invalid by the pre processing based on information included in the associated message context, or to access directly to some particular information conveyed by the SIP message without parsing the whole SIP message, such information being indicated on the associated message context.

Consequently, this message context allows reducing the load of SIP application, either by suggesting discarding some SIP messages or by indicating some information useful for parsing at the SIP application level.

In these conditions, it is possible to reduce or prevent the impact of misuse of the SIP signalling channel at a terminal implementing the SIP protocol.

In one embodiment, a misuse of the SIP signalling channel can be defined as follows:
- sending non-SIP data packets over a SIP signalling channel;
- sending erroneous SIP messages over the SIP signalling channel;
   or
- sending data packets over the SIP signalling channel at a rate which is not adapted.

In one embodiment of the present invention, the SIP application is designed in order to exploit correctly and efficiently information contained in the message context provided in association with the SIP message. However, the already existing SIP applications can be performed even if the pre processing is carried out according to the present invention.

No limitation is attached to the technical implementation of a SIP pre processing according to the present invention. For instance, it can be implemented either as a software module or as a hardware module in the terminal equipment, upstream of the SIP processing step carried out at the SIP application level.

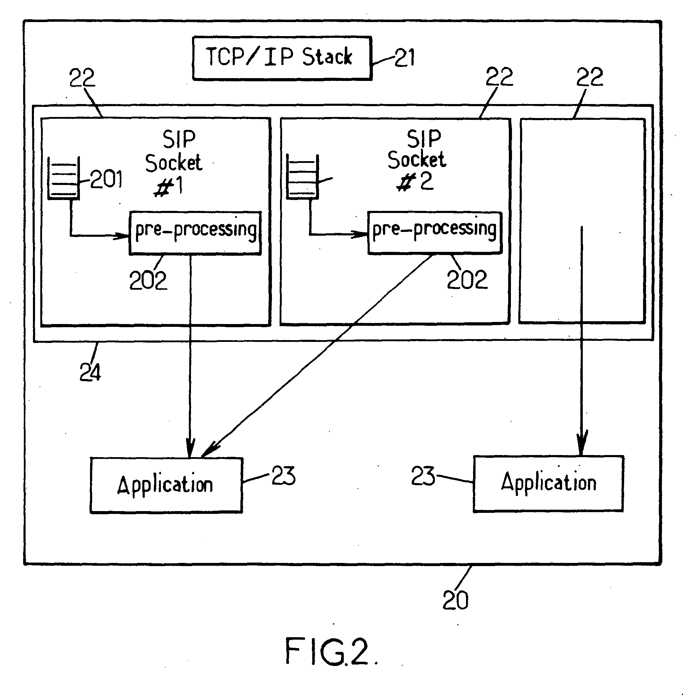

Figure 2 illustrates the processing of a received SIP message in architecture of a terminal according to one embodiment of the present invention.

A SIP signalling session can be established between a calling terminal and a called terminal. The calling terminal can initiate a call session by sending a call session request to the called terminal.

Such a SIP signalling session can be established above a layer-4 flow which can correspond to UPD or to TCP protocol. In this case, the SIP signalling session is uniquely identified by:
- the respective IP addresses of the calling terminal and the called terminal;
- a given source port number selected by the calling terminal; and
- a destination port number, which can be a standard value like 5060 as defined in the RFC3261 (for 'Request For Comments').

When the used layer-4 protocol is the TCP protocol, a TCP connection is established between the calling terminal and the called terminal prior to the establishment of the SIP signalling session and torn-down after the end of this SIP signalling session.

In that case, SIP messages sent over one way of the TCP connection are delimited by using information provided within the SIP messages, like for instance, an indication for content length indicated in a specific field of each SIP message header, an indication of method name in a SIP request message or an indication on status line in a SIP response message.

When the used layer-4 protocol is the UDP protocol, each SIP message is simply encapsulated in a single UDP datagram. The delimitation of SIP messages is then implicitly performed by UDP.

In one embodiment of the present invention, a pre-processing is applied to data packets received over the layer-4 flows for a set of specific destination ports.

For illustration purpose, on Figure 2, a terminal 20 comprises:
- a protocol stack 21 (TCP/IP stack) adapted to be an interface with the network through which the data packets are received;
- a SIP pre processing module 24 that includes a plurality of pre processing entities called SIP sockets 22; and
- a first and a second SIP applications 23.

In the illustrated case, three different SIP sockets, socket #1, socket #2 and socket #3, are managed at the terminal level according to one embodiment of the present invention.

Inside each of these SIP sockets 22, data packets are received at first in a data packet FIFO 201. Then, the received data packets are processed at a pre processing unit 202. At the output of this pre processing unit 202, a message context is generated for each received data message. The data message and its associated message context are transmitted to the SIP application level 23.

Advantageously, next, the corresponding SIP application is adapted to carry out a parsing step on each received SIP message, based on information included in the associated message context.

In order to make the analysis, carried out at the SIP application level, more efficient, it can be useful to classify the received SIP messages in different classes, at the packet pre processing level. The different classes can be the following ones:
- *Discarded:* meaning that a SIP message cannot be pre-parsed, for instance because of too many incoming messages on the network interface or because the source IP address belongs to a black address list;
- *Grammatically invalid:* meaning that a SIP message has a syntax or grammatical error which is detected on the basis on a set of grammatical rules;
- *Semantically invalid:* meaning that a SIP message contains some information which are semantically incorrect or which are missing regarding a set of semantic rules; and
- *Message valid :* meaning that a SIP message is correct regarding a set of pre parsing criterion, which can correspond to said set of grammatical rules and/or said set of grammatical rules.

For that purpose, the pre processing unit 202 has an access to a set of pre parsing criterion, and/or a set of grammatical rules and/or said set of semantic rules.

In these conditions, according to one embodiment of the present invention, a class is associated to each pre parsed SIP message according to the present invention. This association is performed by generating, for each pre parsed SIP message, a message context which contains the determined class.

Thus, this SIP pre processing provides to a SIP application the SIP message, as received, and an associated context indicating a class provided at the pre processing unit level, according to one embodiment.

This associated context can also indicate some other useful information that allows accelerating SIP application parsing and decisional processes.

For illustration, each SIP application is bound to a respective TCP/UDP port and listen incoming TCP/UDP data packets on this port.

Inside the SIP pre processing module 24, one SIP pre processing entity called SIP socket 22, is dedicated to one managed TCP connection. However, only one socket can be required to process all incoming UDP messages destined to a single SIP user application.

The SIP socket 22 analyses received traffic, but can advantageously stay transparent to data transmitted by the upper SIP applications.

For instance, if two SIP applications are respectively running on port number 5060 and port number 5061, two distinct SIP sockets 22 can be allocated respectively to process UDP messages received on port 5060 and 5061. Then, a new SIP application is preferably allocated for each new TCP connection.

New SIP socket 22 can be opened and closed in the same way as the TCP/UDP sockets in the POSIX (for 'Portable Operating System Interface for UNIX') environment, for instance.

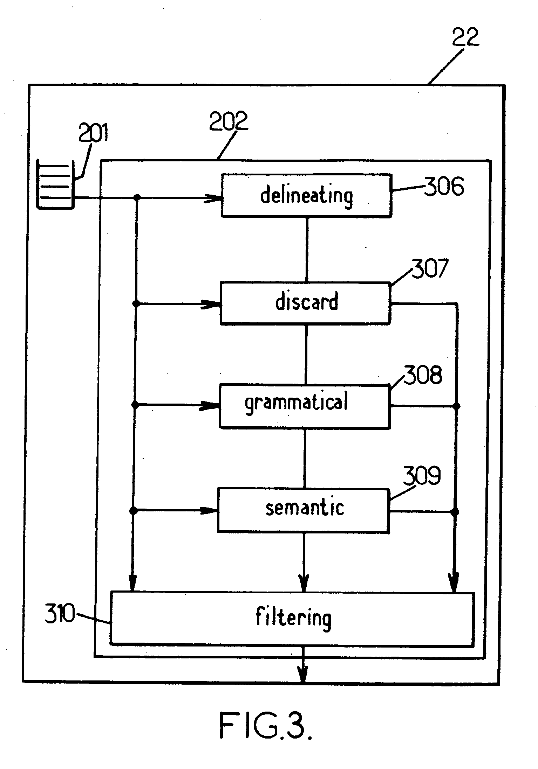

Figure 3 illustrates in detail a SIP socket 22 according to one embodiment of the present invention.

A SIP socket 22 can comprise :
- a data packet FIFO 201; and
- a SIP pre processing unit 202 that contains:
   - a delineation unit 306;
   - a pre discard unit 307;
   - a grammatical pre parsing unit 308;
   - a semantic pre parsing unit 309; and
   - a filtering unit 310.

A pre discard unit 307 is adapted to early discard some data messages based on some pre discarding criterion.

A SIP signalling session is conveyed by the TCP/IP stack 21 to a SIP port at terminal 20. Data packets are received on this SIP port and they are queued into the FIFO 201.

Then, from received data packet, consecutive SIP messages are delineated by the delineation unit 306.

Theoretically, when consecutive valid SIP messages are received, there is no problem to define the succession of these SIP messages, meaning to find the end of a previous SIP message and the beginning of a next SIP message. Indeed, in each SIP message, a content-length header indicates the exact size of the corresponding SIP message.

But, when an invalid SIP message is received, for instance when a content-length header of a received SIP message indicates wrong information, this SIP message can be discarded and the delineation unit consumes data until it find the first line of a new SIP message. This first line of a SIP response message can be, for instance, determined based on the string 'SIP/2.0'.

Thus, the data packets stored in FIFO 201 are presented through consecutive SIP messages at the output of the delineating unit 306, in order to be transmitted to the pre discard unit 307. Indeed, the delineation unit 306 transmits each SIP message to the pre discard unit 307.

This pre discard unit 307 is adapted, for instance, to avoid a flooding of SIP message or to prevent reception of SIP message arriving from a source address known as a corrupted or malicious address. For that, the pre discard unit 307 can have access to a black list of source address.

This step of discarding message in the pre processing unit 202 can make the handling of received SIP data messages more efficient, avoiding processing any other analysis on discarded SIP data messages in some cases.

A SIP message classified as "discarded" by the pre discard unit 307 is not analysed by further units and is directly passed to the filtering unit 310. The associated context can further indicate the reason of discarding.

No limitation is attached to the present invention regarding the reason to apply a discarding on a SIP message. For instance, in one embodiment of the present invention, the pre discard unit 307 can be adapted to discard randomly SIP messages when too many SIP messages are received per time unit. For that purpose, a threshold can be defined and, when the number of received SIP messages is higher than this threshold, this pre discard unit 307 randomly discard some received messages before going through grammatical pre-parsing unit 308, in order to handle a number of received packet lower that the threshold per time unit.

The pre discard unit 307 provides SIP messages which are not discarded to the grammatical pre parsing unit 308.

At this stage, the grammatical pre parsing unit 308 is in charge to pre parse SIP messages based on a set of SIP grammar rules which can be advantageously reduced compared to a set of grammar rules applied at the SIP application level 23, like a SIP ABNF grammar as defined in RFC3261, or in RFC2334. For reminder, the pre processing unit is not designed to replace the analysis of SIP messages carried out at the SIP application level.

This set of SIP grammar rules used by the pre parsing unit 308 can be advantageously refined according to the type of supported SIP applications 23.

This grammatical pre parsing unit 308 can be adapted to determine if a SIP message provided by the pre discard unit 307 is grammatically valid or is grammatically invalid.

The grammatical pre-parsing unit 308 can process a SIP message as it is described below.

At least some SIP headers can be pre parsed. More precisely, some fields in these SIP headers can be advantageously determined as relevant fields, and only these relevant fields are checked at this grammatical pre parsing unit 308, according to a set of grammatical rules. For instance, the set of grammatical rules defines the authorized character set for each relevant field and their maximum allowed length. SIP message is considered as grammatically valid if all its relevant fields respect the set of grammatical rules.

Next, if the SIP message is detected as grammatically valid, the first line of the considered SIP message is parsed. Processing of the first line of a SIP message can be advantageously different from processing of others line, since processing of the first line allows detecting if the current message is a SIP message. This detection can be performed based on the presence of the "SIP/2.0" string in the first line.

Afterwards, by processing the first line, when the message is checked as a SIP message, it is possible to check the type of this SIP message, meaning whether the SIP message is a SIP response or a SIP request.

The checking performed at the grammatical pre parsing unit level can take into account a check on a method name of the SIP message. Thus, a method name can be identified in the SIP message and a request URI (for 'Uniform Resource Identifier') can be localised inside the first line, meaning an offset and a length can be determined.

For instance, for a SIP response message, a field, which is referenced as the returned code number in the RFC 3261, is decoded, meaning the corresponding ASCII code number is converted to digital value. The offset of the beginning of the reason phrase (field) ASCII string is returned

After processing the first line, the grammatical pre parsing unit 308 is adapted to process the other lines of the SIP message, which are header lines.

Generally, each header line begins with a Header Name which is followed by a HCOLON grammar rule defined in the RFC 3261 (':' eventually surrounded by spaces or tabulations), and the rest of the line contains a header value. An empty line can mark the end of header.

The grammatical pre-parsing unit 308 can be adapted to localise and to identify the header names in the SIP message. Consequently, the grammatical pre parsing unit 308 can provide location of header fields, with corresponding offset and length. It is possible to check if this offset and this length are both as expected.

In addition, this grammatical pre parsing unit 308 can also check if characters used in the considered field belong to a determined set of possible characters. For instance, it can be planned that characters used in the "Content-Length" header belong to the following numeric set:
(0; 1; 2; 3; 4; 5; 6; 7; 8; 9)

Next, the grammatical pre parsing unit 308 can analyse only a determined set of header names. For that purpose, header values are extracted only for the header names belonging to this set, in the SIP message. This set of header names can advantageously include at least the "Content-Length" header in order to be able to check the body size of the SIP message.

Header values may be converted, for instance in digital values and may be copied into the message context to be associated to the SIP message.

The set of header names may also include the header corresponding to the SIP method name, meaning "CSeq" header, in order to be able to check the method name for response messages.

Other headers can be parsed specifically according to the needs of SIP applications for which the SIP pre processing is carried out according to one embodiment of the present invention. For instance, it can be useful for some SIP applications to get the value announced into a field which is referenced as the "www-authenticate" header in the RFC 3261.

The grammatical pre parsing unit 308 can be further adapted to check body size of the SIP message. Theoretically, the message body size should correspond to the size advertised in content-length field of the corresponding header, for instance in number of bytes.

When a layer-4 transport protocol like TCP is used, the Content-Length header field should be present in all SIP request and response messages. If this information is not provided, the terminals can assume that the message body continues until TCP connection is closed and can be considered as an erroneous SIP message.

If the layer-4 protocol is UDP protocol, this information may not be provided. In this latter case, the body of message should occupy the rest of the data message after the SIP header. When there is no body, content-length is equal 0.

If an error is detected at this stage, the message will be classified as "semantically invalid". This is framing error, and, the current message can be destroyed.

The SIP message, processed by the grammatical pre parsing unit 308, is then provided to the semantic processing unit 309, in order to perform additional checking and processing, like for instance conversions, in order to fill the message context structure associated to the SIP message. As an output of this stage, messages are classified as valid or invalid semantically.

The semantic processing unit 309 is adapted to identify the method name corresponding to the SIP message, the method name being localised by the grammatical pre parsing unit 308, either in the first line for a SIP request message, or in the CSeq header for a SIP response message, as described above. The method name is then identified within a defined set of known method names and a corresponding method identifier, MethodlD, is determined.

The set of known method names is finite and can be defined by the SIP application. When an unknown method name is identified in the SIP message, it is classified as Invalid semantically.

For instance, this list of known method name can be the following one:

| **Method name** | **MethodID (Request)** | **MethodID (Response)** |
|---|---|---|
| *Unknown string* | 0x0 | 0x80 |
| "INVITE" | 0x1 | 0x81 |
| "ACK" | 0x2 | 0x82 |
| "OPTIONS" | 0x3 | 0x83 |
| "BYE" | 0x4 | 0x84 |
| "CANCEL" | 0x5 | 0x85 |
| "REGISTER" | 0x6 | 0x86 |

It can be noticed that the value of MethodID depends on the type of message (Request or Response).

Header name can be also identified within a defined set of header names. Next, a header name identifier, HeaderID, can be determined and inserted into the associated message context. Some aliases can be defined for a single HeaderID. A SIP message with an unknown header is classified as invalid semantically.

The set of known headers is finite and can be defined by the SIP application.

For instance, this set of header names can be the following one:

| Header | Header ID | Comment |
|---|---|---|
| Unknow_id | 0xF | The header is not known |
| Empty_id | 0xF | No header found |
| From (or F) | 0x00 | Valid header values |
| To (or T) | 0x01 | |
| CALL ID (or I) | 0x02 | |
| VIA (or V) | 0x03 | |
| CSEQ | 0x04 | |
| CONTACT (or M) | 0x05 | |
| CONTENT_LENGTH (or L) | 0x06 | |
| CONTENT_TYPE (or C) | 0x07 | |
| ACCEPT | 0x08 | |
| EXPIRES | 0x0A | |
| AUTHORIZATION | 0x0B | |

According to the method identifier, MethodID, some headers could be unique in the SIP message. List of unique header name can be defined by the SIP application for each method name of the set of method names.

A SIP message with duplicated header can be classified as invalid semantically.

The semantic processing unit 309 can be further adapted to check the header parameter length, and then determine if the length of each header parameter is included in a range which can be defined by the SIP application.

The semantic processing unit 309 can be further adapted to count header names and check number of their occurrences. For that purpose, the occurrences of each header name are counted. The total number of each header occurrences could normally be included in a given range that can be defined for each MethodID by the SIP application. If the number of occurrence is out of this given range, then the message can be classified as "Invalid semantically".

| | Method name | | | | | | | | | | | |
|---|---|---|---|---|---|---|---|---|---|---|---|---|
| | INVITE_REQ | | ACK_REQ | | OPTIONS_ REQ | | BYE_REQ | | CANCEL_REQ | | REGISTER_REQ | |
| | min | max | mi n | max | min | max | min | max | min | max | min | max |
| From | **1** | 3 | **1** | 3 | **1** | 3 | **1** | 3 | **1** | 3 | **1** | 3 |
| To | **1** | 2 | **1** | 2 | **1** | 2 | **1** | 2 | **1** | 2 | **1** | 2 |
| Call_id | **1** | **1** | **1** | **1** | **1** | **1** | **1** | **1** | **1** | **1** | **1** | **1** |
| via | **1** | 4 | **1** | 4 | **1** | 4 | **1** | 4 | **1** | 4 | **1** | 4 |
| cseq | **1** | **1** | **1** | **1** | **1** | **1** | **1** | **1** | **1** | **1** | **1** | **1** |
| Contact | 0 | 1 | 0 | 1 | 0 | 1 | 0 | 1 | **0** | 0 | 0 | 4 |
| Content-length | **0** | **1** | **0** | **1** | **0** | **1** | **0** | **1** | **0** | **1** | **0** | **1** |
| Accept | 0 | 1 | **0** | **0** | 1 | 1 | 0 | 1 | **0** | **0** | 0 | 1 |
| Expires | **0** | **1** | **0** | **0** | **0** | **0** | **0** | **0** | **0** | **0** | **0** | **1** |
| autho rization | **0** | 9 | **0** | 9 | **0** | 9 | **0** | 9 | **0** | 9 | **0** | 9 |

At the end, after being processed by the semantic processing unit 309, a SIP message is associated to a status which is either semantically valid or semantically invalid. After, this SIP message is transmitted to the filtering unit 310.

At the filtering level, a SIP message can be discarded or sent to the corresponding SIP application 23 with its associated message context.

This filtering unit 310 can advantageously apply a discarding mask, meaning that this filtering unit 310 can discard a SIP message according to the class indicated in the message context associated to this SIP message.

The filtering unit 310 can be further in charge of dequeuing the data packet FIFO.

The following table explains the filtering mask parameter.

| Filtering mask | MSK3 | MSK2 | MSK1 | MSK0 |
|---|---|---|---|---|
| Packet class | Discard | Grammatically invalid | Semantically invalid | Valid traffic |

For instance, when the parameter 'filtering_mask' is set to 0100, it specifies that only messages classified as "grammatically.invalid" are discarded by the filtering unit. All other message classes are kept for a further analysis.

In one embodiment of the present invention, a SIP socket 22 can be loaded and configured via a command interface through a set of primitives which can be used. These primitives can be similar to standard socket primitives defined in POSIX environments, like 'open', 'bind', 'listen', 'accept', 'write', 'read'.

The following sections describe a configuration, received as input, for the SIP socket 22 according to one embodiment.

For binding SIP socket, a TCP/UDP port is reserved for reception of TCP or UDP packets. For TCP, this port can be used to listen a new incoming TCP connection.

The following parameters can be set:
- protocol (UDP or TCP) ;
- local port number (for instance 5060);
- list of SIP method names;
- for each SIP method name:
   o list of valid header name, like request and response;
   o for each header name:
      ■ minimum and maximum occurrence number; and
      ■ minimum and maximum length of the parameter;
- list of unauthorized source IP addresses;
- discarding mask, according to the classification of messages.

The following sections describe the output of SIP socket according to one embodiment, by detailing notably the content of a message context that is generated during SIP message pre processing.

The message context can contain three types of reports that are generated during the pre processing of the message:
- a first line report indicating *'method description report*';
- a number of header line reports for each successive header line; and
- a final report generated when message is totally processed.

The different reports can be concatenated to correspond to a global report to be included in the message context of a SIP message.

For instance, if a SIP message is identified as an erroneous message from the first line of the SIP message, only the final report may be written.

For that purpose, a field 'Report_type' can encode the report type. This field can be set to:
- method_report;
- header_report; and
- final_report.

To delineate the different reports included in the message context associated to a SIP message according to one embodiment, there are different ways. For instance, it is possible to determine a fixed size for all reports or it is possible to separate them by any sign or blank, or it is possible to manage reports as a linked list.

The content of this report can depend on whether the message is identified as a SIP request or as a SIP response message.

If the message is identified as a SIP request message, the report can contain the following information:
o Report_type corresponding to method_report ;
o Msg_type corresponding to request or MethodID or RequestURI_Idx or URI_Length or Line_Length.

For instance, a SIP message that contains the data: "INVITE sip:bob@192.0.2.4 SIP/2.0 <CR><LF>" is associated to a report comprising the following information:
Msg_type = request;
MethodID = INVITE;
RequestURI_Idx = 7;
URI_Length = 17;
Line_Length = 34 (when end of line separators).

Otherwise, if the SIP message is identified as a SIP response message, the report associated includes the following information:
o Report_type = method_report
o Msg_type = response / MethodID / CodelD / ReasonPhrase_Idx / Line_Length.

For instance, a SIP message "SIP/2.0 200 OK" is associated to a report comprising the following information:
Msg_type = response;
CodeID = 200;
ReasonPhrase_Idx = 12;
Line_Length = 16 ((when end of line separators are counted).

The following information can be included in each line of the header report (except first one):
o Report_type = header_report
o HeaderlD / HeaderValue_Idx / LineLen / HeaderValueLen

In one embodiment, there is only one final report in the message context. It contains the summary of the pre processing of the corresponding SIP message.

In this final report, the following information is provided:
- Report_type = final report
- MsgStatus : Discarded or Grammatically invalid or Semantically invalid or Message valid
- Content-Length value
- Other values (if specified) : CSeq for instance

The SIP pre processing module 24 can be implemented either in a software module or in a hardware module.

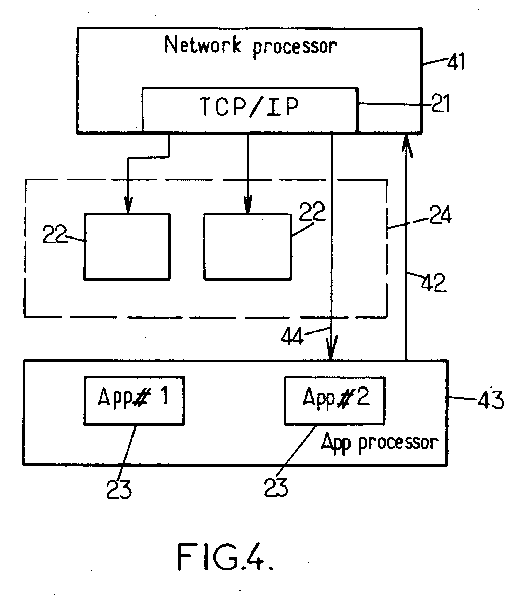

Figure 4 illustrates the use of a SIP pre processing module 24 in a hardware terminal.

A network processor 41 handles the protocol stack 21 up to layer-4. This network processor module 21 can be directly connected to Ethernet MAC interface.

An application processor 43 can be adapted to run applications 23 under an operating system with its network stack handling off-loaded in network processor.

The data packet received on a reserved port (socket bound on port 5060 for instance) is sent to SIP socket #1. The data packet received on a reserved port (socket bound on port 5061 for instance) is sent to SIP socket #2. The rest of data packet is directly handled by the application processor.

The SIP pre processing module can be advantageously configured by the application processor, for instance regarding the specific fields to parse, the maximum threshold for overload detection...

After pre processing a SIP message according to one embodiment, if the SIP message is valid, it is then passed to the application processor 43. Advantageously, the application then exploits the associated message context and performs all other parsing and message interpretation tasks, if required at its level. Otherwise, as described above, a SIP message can be destroyed according to the classification discarding mask, at the filtering level. In this last case, in one embodiment, only a shorter message context is transferred to the application processor 43.

A path of transmission from the network processor 41 to the Application processor 43 can be adapted to transmit any type of traffic. Another path can be used to transmit some information from the application processor 43 to the network processor 41.

For this kind of pre processing, the message can be processed sequentially. Preferably, each character is read only one time, because there is no need to handle backtracking like in classical software parsing.

Several states machine that use the same input symbol can be evaluated in parallel. For instance a string matcher is evaluated while the end of string separator is searched, and the result of string matcher is considered when separator is found.

It could be also useful to read some characters in advance in order to implement some "look-ahead" functions. By knowing the next few characters to analyze, it helps to determine end of line sequences, or to identify the end of the header. Characters read are pushed in a shift register of some depth to provide the needed look-ahead.

The, string matching functions can be performed in order to carry out an identification of method or an identification of different possible headers. The well known "Aho-Corasick" multiple string matching algorithm can be used for instance in this context. A deterministic finite automata (DFA) can be generated with this algorithm, each accepting state of the DFA corresponding to a recognized string.

SIP grammar is normally case insensitive for character, except for METHOD encoding, which is in uppercase. Strings stored in Aho Corasick DFAs are normalized in upper case. The input stream will be normalized in uppercase before being presented to string matcher. The normal stream can be conserved to allow checking.

A specific function, or a set of specific functions, can be used to check if characters employed in a particular field are allowed or not. This can be implemented using a lookup table which contains pre-calculated values of the different set functions (charsets) for each possible value of input alphabet. It is possible to implement very efficient and compact lookup table using small memories.

The following paragraph illustrates the main steps of the pre-parsing as may be implemented in hardware.

Processing of the first line of the message is different from the others. It is very simple and allows identifying quite easily if a message is a request or a response message. First word is analyzed to check whether it is a known method or the string "SIP/2.0". If this string if found, the message is supposed to be a response, otherwise it is supposed to be a request.

Identification of the METHOD or SIP/2.0 string can be performed by using an Aho-Corasick DFA.

At the end of the first line processing, meaning when line separator is found, the method description can be generated.

Pre processing of the following lines can be based on the fact that each line begins with a HeaderlD and is followed by a HCOLON (':' eventually surrounded by spaces or HTAB). The rest of the line can contain parameters.

Each first word of the following lines can be identified by a multiple string matching algorithm such as Aho-Corasick. Upon detection of separator the result of the string matcher is evaluated to check if the header name is recognized or not.

At the end of analysis of each line, a « header report » is generated. Processing ends when "end of header" is detected by identifying the blank line: sequence CR LF CR LF.

The final report is then generated.

This mechanism can be advantageously implemented in terminal equipment such as residential or business gateways and so-called IP phones based on the SIP signalling protocol. It prevents the pre-emption of an excessive amount of processing resource for useless data processing that could be injected through the SIP signalling channel until the SIP application.

## Claims

1. A method of handling received data messages according to a text-based protocol at a terminal (20);
said method comprising the following steps:
/1/ pre parsing (308,309) said received data message, according to a set of pre parsing criterion;
/2/ generating a message context to be associated to said data message, said message context indicating information obtained from the pre parsing step; and
/3/ providing said data message and said associated message context to an application running on the terminal;
wherein, at step of pre parsing, the data message is classified in one of the following classes :
- grammatically invalid on the basis of a set of grammatical rules; or
- semantically invalid on the basis of a set of semantic rules; or
- valid regarding pre parsing criterions; and
wherein the associated message context indicates said class.

2. Method of handling received data messages according to claim 1, wherein the set of pre parsing criterion includes a set of grammatical rules and/or a set of semantic rules.

3. Method of handling received data message according to claim 2, wherein the set of grammatical rules is fixed according to the text-based protocol, and corresponds to a partial analysis on several determined relevant fields.

4. Method of handling received data message according to claim 3, wherein the set of semantic rules corresponds to a partial analysis to check validity of the several determined relevant fields.

5. Method of handling received data message according to any one of preceding claims, wherein, before step of pre parsing, a pre discarding step is carried out, said pre discarding step being in charge to determine if a message is classified as pre discarded based on a set of pre discarding criterion.

6. Method of handling received data message according to any one of preceding claims, when received data messages are received in data packets, before step /1/, a step of delineating (306) consecutive data messages from received data packets is performed.

7. Method of handling received data message according to any one of preceding claims, further comprising, before step of providing the data message and the associated message context to the application, a step of filtering (310) said data message based on result of at least pre parsing step.

8. Method of handling received data message according to any one of preceding claims, wherein the message context is filled during the pre parsing step.

9. Pre processing module (24) adapted to handle received data messages according to a text-based protocol at a terminal (20) said pre processing module comprising a following set of units :
a pre parsing unit (308,309) adapted to pre parse said received data message,
according to a set of pre parsing criterion, the data message being classified in one of the following classes :
- grammatically invalid on the basis of a set of grammatical rules; or
- semantically invalid on the basis of a set of semantic rules; or
- valid regarding pre parsing criterions; and
wherein the associated message context indicates said class;
- a generating unit adapted to generate a message context to be associated to said data message, said message context indicating information obtained from the pre parsing unit; and
- a filtering unit (310) adapted to provide said data message and said associated message context to an application running on the terminal.

10. Pre processing module (24) according to claim 9, comprising one set of units per connexion handled at the terminal level.

11. Pre processing module (24) according to claim 9 or 10, further comprising a configuration interface adapted to receive configuration information relative to at least one unit from the set of units.

12. Terminal (20) comprising a pre processing module according to any one of claims 9 to 11.

## Patentansprüche

1. Verfahren zur Verarbeitung empfangener Datennachrichten gemäß einem textbasierten Protokoll an einem Terminal (20), wobei das Verfahren die folgenden Schritte umfasst:
/1/ Vor-Parsing (308, 309) der empfangenen Datennachricht gemäß einem Satz an Vor-Parsing-Kriterien;
/2/ Erzeugen eines Nachrichteninhaltes, der mit der Datennachricht assoziiert wird, wobei der Nachrichteninhalt die aus dem Vor-Parsing-Schritt erhaltene Information anzeigt; und
/3/ Weitergabe der Datennachricht und des assoziierten Nachrichteninhaltes an eine auf dem Terminal laufende Anwendung,
wobei bei dem Vor-Parsing-Schritt die Datennachricht in eine der folgenden Klassen klassifiziert wird:
- grammatikalisch ungültig auf Grundlage eines Satzes grammatikalischer Regeln; oder
- semantisch ungültig auf Grundlage eines Satzes semantischer Regeln; oder
- gültig im Hinblick auf die Vor-Parsing-Kriterien,
und wobei der assoziierte Nachrichteninhalt die Klasse anzeigt.

2. Verfahren zur Verarbeitung empfangener Datennachrichten gemäß Anspruch 1, wobei der Satz an Vor-Parsing-Kriterien einen Satz grammatikalischer Regeln und/oder einen Satz semantischer Regeln umfasst.

3. Verfahren zur Verarbeitung empfangener Datennachrichten gemäß Anspruch 2, wobei der Satz grammatikalischer Regeln gemäß dem textbasierten Protokoll festgelegt wird und einer Teilanalyse verschiedener bestimmter relevanter Bereiche entspricht.

4. Verfahren zur Verarbeitung empfangener Datennachrichten gemäß Anspruch 3, wobei der Satz semantischer Regeln einer Teilanalyse zur Überprüfung der Validität der verschiedenen bestimmten relevanten Bereiche entspricht.

5. Verfahren zur Verarbeitung empfangener Datennachrichten gemäß irgendeinem der vorhergehenden Ansprüche, wobei vor dem Vor-Parsing-Schritt ein Vor-Discarding-Schritt durchgeführt wird, wobei der Vor-Discarding-Schritt dazu dient zu bestimmen, ob eine Nachricht auf Grundlage eines Satzes an Vor-Discarding-Kriterien als vorher verworfen klassifiziert wird.

6. Verfahren zur Verarbeitung empfangener Datennachrichten gemäß irgendeinem der vorhergehenden Ansprüche, wobei, wenn empfangene Datennachrichten in Datenpaketen empfangen werden, vor Schritt /1/ ein Schritt (306) durchgeführt wird, in dem aufeinander folgende Datennachrichten aus den empfangenen Datenpaketen abgegrenzt werden.

7. Verfahren zur Verarbeitung empfangener Datennachrichten gemäß irgendeinem der vorhergehenden Ansprüche, welches ferner vor dem Schritt der Weiterleitung der Datennachricht und des assoziierten Datenkontextes an die Anwendung ein Schritt (310) durchgeführt wird, in dem die Datennachricht auf der Grundlage des Ergebnisses wenigstens eines Vor-Parsing-Schritts gefiltert wird.

8. Verfahren zur Verarbeitung empfangener Datennachrichten gemäß irgendeinem der vorhergehenden Ansprüche, wobei der Nachrichteninhalt während des Vor-Parsing-Schritts gefüllt wird.

9. Vorverarbeitungsmodul (24) zur Verarbeitung empfangener Datennachrichten gemäß einem textbasierten Protokoll an einem Terminal (20), wobei das Vorverarbeitungsmodul den folgenden Satz an Einheiten umfasst:
- eine Vor-Parsing-Einheit (308, 309) zum Vorparsen der empfangenen Datennachricht gemäß einem Satz an Vor-Parsing-Kriterien, wobei die Datennachricht in eine der folgenden Klassen klassifiziert wird:
- grammatikalisch ungültig auf Grundlage eines Satzes grammatikalischer Regeln; oder
- semantisch ungültig auf Grundlage eines Satzes semantischer Regeln; oder
- gültig im Hinblick auf die Vor-Parsing-Kriterien,
und wobei der assoziierte Nachrichteninhalt die Klasse anzeigt,
- eine Erzeugungseinheit zur Erzeugung eines Nachrichteninhaltes, der mit der Datennachricht assoziiert wird, wobei der Nachrichteninhalt die von der Vor-Parsing-Einheit erhaltene Information anzeigt; und
- eine Filtereinheit (310), welche die Datennachricht und den assoziierten Nachrichteninhalt einer auf dem Terminal laufenden Anwendung zur Verfügung stellt.

10. Vorverarbeitungsmodul (24) gemäß Anspruch 9, umfassend einen Satz an Einheiten pro auf Terminal-Niveau verarbeiteter Verbindung.

11. Vorverarbeitungsmodul (24) gemäß Anspruch 9 oder 10, weiterhin umfassend eine Konfigurationsschnittstelle zum Empfang von Konfigurationsinformation in Bezug auf wenigstens eine Einheit aus dem Einheitensatz.

12. Terminal (20), welcher ein Vorverarbeitungsmodul gemäß irgendeinem der Ansprüche 9 bis 11 umfasst.

## Revendications

1. Procédé de manipulation de messages de données reçus selon un protocole textuel au niveau d'un terminal (20) ;
ledit procédé comprenant les étapes suivantes consistant à :
/1/ aiguiller (308, 309) ledit message de données reçu, selon un jeu de critères d'aiguillage ;
/2/ générer un contexte de message à associer audit message de données, ledit contexte de message indiquant des informations obtenues à l'étape d'aiguillage ; et
/3/ fournir ledit message de données et ledit contexte de message associé à une application en exécution sur le terminal ;
dans lequel, à l'étape d'aiguillage, le message de données est classé dans l'une des classes suivantes :
- grammaticalement invalide d'après un jeu de règles grammaticales ; ou
- sémantiquement invalide d'après un jeu de règles sémantiques ; ou
- valide vis-à-vis des critères d' aiguillage ; et
dans lequel le contexte de message associé indique ladite classe.

2. Procédé de manipulation de messages de données reçus selon la revendication 1, dans lequel le jeu de critères d'aiguillage inclut un jeu de règles grammaticales et/ou un jeu de règles sémantiques.

3. Procédé de manipulation de messages de données reçus selon la revendication 2, dans lequel le jeu de règles grammaticales est fixé selon le protocole textuel, et correspond à une analyse partielle de plusieurs champs pertinents déterminés.

4. Procédé de manipulation de messages de données reçus selon la revendication 3, dans lequel le jeu de règles sémantiques correspond à une analyse partielle pour vérifier la validité des plusieurs champs pertinents déterminés.

5. Procédé de manipulation de messages de données reçus selon l'une quelconque des revendications précédentes, dans lequel, avant l'étape d'aiguillage, une étape de présuppression est réalisée, ladite étape de présuppression étant chargée de déterminer si un message est classé comme présupprimé d'après un jeu de critères de présuppression.

6. Procédé de manipulation de messages de données reçus selon l'une quelconque des revendications précédentes, dans lequel lorsque des messages de données reçus sont reçus en paquets de données, avant l'étape /1/, une étape de délimitation (306) de messages de données consécutifs dans les paquets de données reçus est exécutée.

7. Procédé de manipulation de messages de données reçus selon l'une quelconque des revendications précédentes, comprenant en outre, avant l'étape consistant à fournir le message de données et le contexte de message associé à l'application, une étape de filtrage (310) dudit message de données d'après le résultat d'au moins l'étape d'aiguillage.

8. Procédé de manipulation de messages de données reçus selon l'une quelconque des revendications précédentes, dans lequel le contexte de message est rempli pendant l'étape d'aiguillage.

9. Module de prétraitement (24) adapté pour manipuler des messages de données reçus selon un protocole textuel au niveau d'un terminal (20),
ledit module de prétraitement comprenant un jeu d'unités suivant :
une unité d'aiguillage (308, 309) adaptée pour aiguiller ledit message de données reçu selon un jeu de critères d'aiguillage, le message de données étant classé dans l'une des classes suivantes :
- grammaticalement invalide d'après un jeu de règles grammaticales ; ou
- sémantiquement invalide d'après un jeu de règles sémantiques ; ou
- valide vis-à-vis des critères d' aiguillage ; et
dans lequel le contexte de message associé indique ladite classe ;
- une unité de génération adaptée pour générer un contexte de message à associer audit message de données, ledit contexte de message indiquant des informations obtenues de l'unité d'aiguillage ; et
- une unité de filtrage (310) adaptée pour fournir ledit message de données et ledit contexte de message associé à une application en exécution sur le terminal.

10. Module de prétraitement (24) selon la revendication 9, comprenant un jeu d'unités par connexion manipulée au niveau du terminal.

11. Module de prétraitement (24) selon la revendication 9 ou 10, comprenant en outre une interface de configuration adaptée pour recevoir des informations de configuration relatives à au moins une unité dans le jeu d'unités.

12. Terminal (20) comprenant un module de prétraitement selon l'une quelconque des revendications 9 à 11.
